# EUROPEAN PATENT APPLICATION

(11) **EP 4 757 434 A1**
(43) Date of publication of application: **10.06.2026**
(21) Application number: 25221172.7
(22) Date of filing: 05.12.2025
(51) Int. Cl.: H04W 52/02, H04W 56/00

(54) **SYNCHRONIZATION IN AN AMBIENT INTERNET-OF-THINGS ENVIRONMENT**

(30) Priority: 06.12.2024 US 202463729287 P; 21.11.2025 US 202519396832
(71) Applicant: Samsung Electronics Co., Ltd., Suwon-si, Gyeonggi-do 16677 (KR)
(72) Inventor: ZHOU, Yuhan, San Jose, CA, 95134 (US); FOUAD, Yaser Mohamed Mostafa Kamal, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

A method, apparatus, and product are disclosed for synchronization in an Ambient Internet-of-Things, AIOT, environment. Such synchronization includes generating (802), by a reader, a timing acquisition signal for an AIOT device, the timing acquisition signal including a preamble having a start-indicator part and a clock-acquisition part. Generating the timing acquisition signal includes: forming (804) the start-indicator part, the start-indicator part having a pattern that identifies a start of a reader-to-device transmission; and forming (806) the clock-acquisition part, the clock-acquisition part including a signal corresponding to a timing parameter associated with subsequent reader-to-device transmission. The reader then transmits the timing acquisition signal toward the AIOT device to enable timing synchronization.

## Description

### TECHNICAL FIELD

The disclosure generally relates to data communications. More particularly, the subject matter disclosed herein relates to improvements to synchronization in an Ambient Internet-of-Things (AIOT) environment.

### SUMMARY

AIOT systems extend conventional wireless communication frameworks to support low-power and energy-harvesting devices. The Internet-of-Things refers to a network architecture in which interconnected devices exchange data through wireless or wired connections, enabling distributed sensing, monitoring, and control. The AIOT represents an evolution of that concept in which devices operate using minimal power, often harvesting energy from environmental radio-frequency sources, and communicate through reflected or weakly transmitted signals rather than continuous active transmission. Example AIOT devices may include battery-free environmental sensors that monitor temperature, humidity, or air quality; asset-tracking tags used in logistics and supply chain management; identification labels or tags embedded in retail packaging; smart home sensors that detect motion or light; structural health monitoring sensors integrated into buildings or infrastructure; wearable or implantable biomedical sensors; and agricultural sensors that measure soil moisture or crop conditions, among others.

In an AIOT environment, a reader transmits downlink signals that provide energy and information to AIOT devices, which may use reflection or active transmission to communicate. These systems rely on precise timing and frequency references so that devices can correctly interpret control or data signals transmitted from the reader. Traditional wireless synchronization techniques, such as those used in cellular and Wi-Fi networks, assume the presence of stable oscillators, continuous power availability, and processing resources sufficient to track complex preambles. Ambient loT devices often lack those capabilities because they operate intermittently and depend on harvested energy.

Readers that communicate with energy-harvesting devices must convey synchronization information within very short signaling intervals and under variable energy conditions. Existing downlink signaling formats developed for active wireless devices typically include long training sequences or dense reference symbols, which require sustained power and high sampling precision. These formats increase decoding complexity and shorten device operating time. As Ambient loT networks expand to support many device types and deployment scenarios, the limitations of these conventional synchronization procedures restrict network scalability and reliable device access.

To overcome these issues, methods, apparatus, and products are described herein for synchronization in an AIOT environment. Synchronization in an AIOT environment, according to various embodiments described herein, enables a reader to generate a timing acquisition signal for an AIOT device (or any number of AIOT devices in the environment). The timing acquisition signal includes a preamble having a start-indicator part and a clock-acquisition part. The clock-acquisition part includes a signal corresponding to a timing parameter associated with the clock-acquisition part and a subsequent reader-to-device transmission. The reader then transmits the timing acquisition signal toward the AIOT device. When the AIOT device receives the timing acquisition signal, the device detects the pattern within the start-indicator part to determine the start of the reader-to-device transmission and uses the signal within the clock-acquisition part to derive the timing parameter and align a device clock to the reader transmission timing.

The above approaches improve on previous techniques because the described signaling structure enables reliable time alignment for low-power AIOT devices without requiring continuous monitoring, high-complexity processing, or dedicated reference hardware. The use of a preamble including a start-indicator part and a clock-acquisition part allows an AIOT device to detect the beginning of a reader-to-device transmission using minimal signal energy and to determine a timing parameter directly from the received waveform. This structure reduces synchronization latency, increases timing precision, and decreases the energy needed for clock recovery. The described techniques also allow a reader to maintain synchronization with multiple devices operating under different power and frequency conditions, thereby supporting large-scale AIOT deployments. These improvements enhance communication stability, reduce transmission errors, and extend device operational life in environments where energy harvesting and intermittent connectivity limit conventional synchronization performance.

In an embodiment, a method of synchronization in an AIOT includes generating, by a reader, a timing acquisition signal for an AIOT device. The timing acquisition signal includes a preamble having a start-indicator part and a clock-acquisition part. Synchronization also includes forming, by the reader, the start-indicator part, where the start-indicator part has a pattern that identifies a start of a reader-to-device transmission. In various aspects, synchronization in an AIOT environment also includes forming, by the reader, the clock-acquisition part. The clock-acquisition part includes a signal corresponding to a timing parameter associated with the clock-acquisition part and subsequent reader-to-device transmission. Synchronization in an AIOT environment also includes transmitting, by the reader, the timing acquisition signal toward the AIOT device to enable timing synchronization. After receiving the timing acquisition signal, the AIOT device detects the pattern within the start-indicator part to determine the start of the reader-to-device transmission. The AIOT device then uses the signal within the clock-acquisition part to derive the timing parameter, align a device clock to the reader transmission timing, and establish synchronization for subsequent communication.

In an embodiment, an apparatus configured for synchronization in an AIOT environment includes at least one processing device and a memory coupled to the processing device, where the memory stores instructions that, when executed by the processing device, cause the apparatus to generate a timing acquisition signal for an AIOT device. The timing acquisition signal includes a preamble having a start-indicator part and a clock-acquisition part. The processing device forms the start-indicator part, where the start-indicator part has a pattern that identifies a start of a reader-to-device transmission. The processing device also forms the clock-acquisition part, where the clock-acquisition part includes a signal corresponding to a timing parameter associated with the clock-acquisition part and with subsequent reader-to-device transmission. The processing device transmits the timing acquisition signal toward the AIOT device to enable timing synchronization.

In an embodiment, a computer program product configured for synchronization in an AIOT environment includes a non-transitory computer-readable medium storing instructions that, when executed by one or more processing devices, cause the one or more processing devices to generate a timing acquisition signal for an AIOT device. The timing acquisition signal includes a preamble having a start-indicator part and a clock-acquisition part. The one or more processing devices form the start-indicator part, where the start-indicator part has a pattern that identifies a start of a reader-to-device transmission. The one or more processing devices also form the clock-acquisition part, where the clock-acquisition part includes a signal corresponding to a timing parameter associated with with the clock-acquisition part and subsequent reader-to-device transmission. The one or more processing devices transmit the timing acquisition signal toward the AIOT device to enable timing synchronization.

### BRIEF DESCRIPTION OF THE DRAWING

In the following section, the aspects of the subject matter disclosed herein will be described with reference to exemplary embodiments illustrated in the figures, in which:
FIG. 1 is a diagram of an example AIOT environment configured for synchronization in accordance with embodiments of the present disclosure.
FIG. 2 is a block diagram of an example AIOT device of a first type configured for low-power operation and synchronization in accordance with embodiments of the present disclosure.
FIG. 3 is a block diagram of an example AIOT device of a second type including an active transmitter chain and an RF envelope detector receiver in accordance with embodiments of the present disclosure.
FIG. 4 is a diagram of an example timing acquisition signal in accordance with embodiments of the present disclosure.
FIG. 5A is a timing diagram of an example exchange in which a reader transmits a timing acquisition signal embodiments of the present disclosure.
FIG. 5B is a timing diagram of an example exchange in which a reader transmits a paging message followed by a timing acquisition signal with embodiments of the present disclosure.
FIG. 6A is a diagram of an example signal useful for frequency synchronization in accordance with embodiments of the present disclosure.
FIG. 6B is a diagram of an example AIOT frequency synchronization signal in accordance with embodiments of the present disclosure.
FIG. 7A is a timing diagram of an example frequency synchronization exchange in accordance with embodiments of the present disclosure.
FIG. 7B is a timing diagram of another example frequency synchronization exchange in accordance with embodiments of the present disclosure.
FIG. 8 is a flow chart of an example method for generating and transmitting a timing acquisition signal in accordance with embodiments of the present disclosure.
FIG. 9 is a flow chart of another example method for synchronization in accordance with embodiments of the present disclosure.
FIG. 10 is a flow chart of an example method for frequency synchronization in accordance with embodiments of the present disclosure.
FIG. 11 is a block diagram of an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

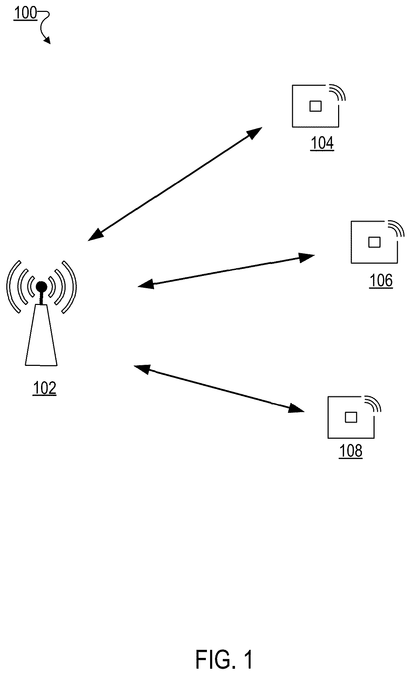

For further explanation, FIG. 1 depicts an example AIOT environment configured for synchronization according to various embodiments of the present disclosure. Low-power and energy-harvesting devices in an AIOT environment depend on intermittent energy sources and cannot maintain continuous timing or frequency references. As mentioned above, conventional synchronization procedures developed for actively powered wireless systems typically use complex preambles, long training sequences, or frequent reference signals to maintain alignment between a transmitter and a receiver. These techniques consume substantial power and processing resources and therefore cannot be efficiently implemented by AIOT devices. Without efficient synchronization signaling, an AIOT device may fail to correctly detect the beginning of a transmission, may misinterpret control or data information, or may lose alignment with the reader, reducing overall communication reliability.

The example environment 100 of FIG. 1 includes a reader 102 and a plurality of devices, including devices 104, 106, and 108. The reader 102 transmits one or more signals toward the devices 104, 106, and 108 to provide synchronization, control, or data communication. Each of the devices 104, 106, and 108 receives transmissions from the reader 102 and may communicate with the reader 102 using reflection, backscatter, or active transmission, depending on device configuration and available energy.

A 'reader,' as the term is used herein, refers to an entity that transmits downlink signals to enable device activation, synchronization, and communication. The reader may be integrated into or co-located with an existing 5G base station (gNB) or may operate as a stand-alone transmitter that performs functions such as energy delivery, timing acquisition, frequency synchronization, and data transfer to AIOT devices. Examples of reader devices include cellular base stations, access points, gateways, or other wireless transmitters capable of supporting AIOT signaling within the reader-to-device (R2D) channel.

The term 'device,' as used herein when referencing an object that receives transmission from a 'reader,' refers to a low-power or energy-harvesting node that communicates with a reader using ambient or reflected signals. Examples of devices include environmental sensors, asset-tracking tags, identification labels, and structural or biomedical monitors operating without a continuous power supply. In various aspects, different device categories may exhibit distinct capabilities. Such device categories are referred to herein as Device 1, Device 2A, and Device 2B. Readers will recognize that these are a few example of device categories or types and others device types may exist and be fully incorporated into the AIOT environment for synchronization as described herein. A device configured as Device 1 type may rely exclusively on backscatter reflection for communication and depend entirely on harvested energy. A device configured as a Device 2A type may include limited active transmission capability and rely on a received carrier signal for frequency reference. A device configured as a Device 2B type may include an internal oscillator that generates a carrier frequency, requiring additional synchronization with the reader to maintain frequency alignment. These different device types operate cooperatively within the AIOT environment 100 to achieve efficient communication through low-power synchronization and signaling procedures.

In the example AIOT environment 100 of FIG. 1, communication between the reader 102 and the devices 104, 106, and 108 occurs through a reader-to-device (R2D) transmission and a device-to-reader (D2R) transmission. During an R2D transmission, the reader 102 generates and transmits a downlink signal that may include energy, control, or data information. The downlink signal provides activation energy to one or more devices and enables the transfer of information required for device operation. The reader 102 may transmit the signal using On-Off Keying, Orthogonal Frequency Division Multiplexing, or another modulation scheme suitable for low-power operation. The R2D transmission may be broadcast to multiple devices or directed to specific devices within the AIOT environment 100, depending on system configuration and device addressing.

Following the R2D transmission, a D2R transmission occurs when one or more of the devices 104, 106, or 108 respond to the reader 102. The D2R transmission may occur through backscatter reflection, where a device modulates the reflection of the reader's signal to encode information, or through an active uplink transmission, where a device generates a low-power carrier using energy harvested from the reader signal. The D2R transmission may carry acknowledgment, control, or sensed data information. In some aspects, the reader 102 coordinates multiple D2R transmissions from different devices through timing and resource allocation parameters included in the R2D signal, enabling scalable and efficient data exchange in the AIOT environment 100.

The reader 102 in the example of FIG. 1 may form the start-indicator part so that the pattern comprises an ON-OFF-ON-OFF sequence. The start-indicator part includes a sequence of symbols that differs from the sequence of symbols used for data transmission. In some embodiments, Manchester encoding may be used to encode data in R2D transmissions. Manchester encoding represents each data bit with two level transitions, where a logical "1" is represented by a high-to-low transition and a logical "0" is represented by a low-to-high transition, providing both data and clock information within the same signal. When Manchester encoding is used for data, the possible symbol sequences are "10" or "01." If an AIOT device detects a sequence containing a symbol pattern other than these two, such a sequence can be identified as a start-indicator.

On-Off Keying (OOK) may also be used to represent symbols in which the presence of a pulse indicates a binary one and the absence of a pulse indicates a binary zero. For example, the start-indicator in the preamble for an AIOT transmission may adopt one of the following sequences: 12 bits of OOK symbols with one pulse per symbol represented as "11 11 11 00 00 00," 12 bits of OOK symbols represented as "00 00 00 11 11 11," 10 bits of OOK symbols represented as "11 00 11 10 10," 10 bits of OOK symbols represented as "01 01 11 00 11," 10 bits of OOK symbols represented as "00 11 10 01 01," or 11 bits of OOK symbols represented as "11 01 11 00 10 1." The start-indicator part may also be implemented as a high-low voltage signal having two repetitions of an ON-OFF pattern, where the first ON-OFF period is used for automatic gain control training and the second ON-OFF period is used for start-indicator detection. Automatic gain control is a signal processing technique that dynamically adjusts the amplification level of a received signal to maintain a consistent amplitude regardless of variations in signal strength. The sequence used for the start-indicator may be fixed in a specification or may be preconfigured by the reader. Where the start-indicator sequence is preconfigured, the reader associates a sequence identifier with each start-indicator sequence and indicates the identifier to the AIOT device through an R2D transmission containing a paging message.

A paging message is a communication transmitted by a reader to alert one or more AIOT devices of an upcoming transmission or to convey configuration information needed for subsequent communication. The paging message may include identifiers, control parameters, or scheduling information that allow a device to prepare for receiving data or synchronization signals. In some embodiments, the paging message may also include information identifying the sequence that will be used in a start-indicator part of a forthcoming timing acquisition signal. Upon receiving the paging message, an AIOT device decodes the information and determines the start-indicator sequence that the reader will use. The device stores or updates the corresponding sequence configuration and enters a state in which it monitors for the specific pattern identified in the paging message, allowing the device to detect the beginning of a reader-to-device transmission with reduced processing and power consumption.

As mentioned above, the reader 102 may also form a clock-acquisition part of the preamble. The example clock-acquisition part of the preamble may be used for clock correction at an AIOT device or at the reader. The clock-acquisition part may also be used to determine an On-Off Keying (OOK) chip duration associated with a subsequent Physical Reader-to-Device Channel (PRDCH) transmission. The PRDCH refers to a downlink communication channel over which a reader transmits energy, control, and data information toward one or more AIOT devices. In this disclosure, PRDCH may refer either to the physical channel itself or to data transmitted on the physical channel, or to data transmitted in accordance with PRDCH signaling protocols. Orthogonal Frequency Division Multiplexing (OFDM) is a multicarrier modulation technique in which multiple subcarriers, each carrying a portion of the data stream, are transmitted simultaneously to improve spectral efficiency and reduce interference between symbols. An On-Off Keying (OOK) chip refers to a discrete time interval representing either the presence or absence of a transmitted pulse, corresponding respectively to a binary one or a binary zero. The clock-acquisition part may be configured to convey a chip duration parameter, denoted as M, by encoding the number of rising or falling edges within the signal. For example, when the number of rising or falling edges is two, the M value is one; when the number of edges is four, the M value is two; when the number of edges is six, the M value is six; when the number of edges is eight, the M value is eight; when the number of edges is between twenty-four and twenty-six, the M value is twelve; when the number of edges is between thirty-two and thirty-four, the M value is sixteen; when the number of edges is between forty-eight and fifty-two, the M value is twenty-four; and when the number of edges is between sixty-four and seventy, the M value is thirty-two.

When a receiving device obtains the timing acquisition signal that includes the clock-acquisition part, the device may analyze the sequence of rising and falling edges to determine a value of M, which may represent the number of OOK chips per OFDM symbol. Based on the detected number of edges, the device can identify the corresponding M value and may use that information to configure a duration of each OOK chip for subsequent communication with the reader. This configuration may allow the device to align a device clock with the symbol duration and chip rate used by the reader during a following PRDCH transmission. By matching timing parameters to those indicated by the reader, the device can accurately sample and decode data transmitted in the downlink signal, thereby improving timing alignment and communication reliability while maintaining low processing and energy requirements.

In some embodiments, the reader 102 may also perform frequency synchronization with one or more of the devices 104, 106, or 108. Frequency synchronization may be used to ensure that the carrier frequency of a device aligns with that of the reader so that transmissions occur within the same frequency reference. Accurate frequency alignment may reduce demodulation errors and enable reliable communication, particularly for devices that generate an internal carrier rather than relying on the reader's transmitted carrier. Frequency synchronization may be achieved through the use of specialized signaling, such as a dedicated frequency synchronization signal or a preamble configured to convey frequency reference information. These signals can be transmitted periodically, semi-persistently, or on demand, allowing the reader to maintain frequency alignment with multiple devices operating under varying energy and oscillator conditions within the AIOT environment 100.

In some exemplary configurations, different techniques may be employed to support frequency synchronization between the reader 102 and the devices 104, 106, and 108. In a first technique, frequency synchronization may be enabled through the use of a special preamble included within a reader-to-device (R2D) transmission. The preamble for frequency synchronization may comprise a set of sequences having different patterns, where each sequence may be generated using a Gold sequence or an M-sequence to ensure autocorrelation properties and low cross-correlation between devices. Different sequences may be associated with different device identifiers so that multiple devices can be distinguished during synchronization. The set of sequences for frequency synchronization can be configured by the reader based on the number of devices operating in the AIOT environment 100. In this configuration, the reader may select and transmit a particular sequence from the set to align frequency with a specific device. For example, when a device transmits a frequency synchronization request through a D2R transmission, the reader may respond with an R2D transmission that includes the special preamble. When no synchronization request is received, the reader may proceed with an R2D transmission including a regular preamble used for timing or data communication.

In another technique, frequency synchronization may be performed using a dedicated signal referred to herein as an AIOT frequency synchronization signal (A-FSS). The A-FSS may be transmitted as part of a PRDCH and can be used for broadcast synchronization from a single reader to multiple devices. The A-FSS may be transmitted with or without R2D data or control information. When A-FSS and R2D data or control signals are transmitted in the same PRDCH slot or time occasion, the reader may transmit the signals in a time-division multiplexed (TDM) manner. When only A-FSS is transmitted in the PRDCH, the preamble preceding the transmission may include a clock-acquisition signal that differs from the clock-acquisition signal used in preambles for data or combined transmissions. In particular, the clock-acquisition part in a preamble preceding a PRDCH transmission carrying only A-FSS may omit the indication of chip length, such as the number of OOK chips per OFDM symbol. The A-FSS may use an OFDM-based waveform employing OOK-1 or OOK-4 modulation schemes, with different numbers of chips per OOK symbol denoted by M. A larger M value may yield finer time accuracy. For example, OOK-4 modulation may use M values of 1, 2, 4, 8, 16, or 24 to achieve the desired synchronization precision. The reader may configure the same or different OOK modulation scheme, and the same or different M values, for the A-FSS and for AIOT data transmissions to balance synchronization accuracy and power efficiency.

In some embodiments, the A-FSS may be transmitted in a broadcast manner from one reader to multiple devices within the AIOT environment 100. The preamble used for the A-FSS may differ from the preamble used for standard R2D data transmissions. The clock-acquisition part of the preamble, based on OOK without line coding, may include rising and falling edges that indicate to a device that the following PRDCH transmission is dedicated to A-FSS. A control part preceding the A-FSS may include a device identifier or a device group identifier to specify which devices are permitted to detect or process the PRDCH dedicated to A-FSS. The control information associated with the PRDCH dedicated for A-FSS may include at least the following parameters: time-domain resources, frequency-domain resources, code rate, device or group identifier, OOK chip duration, and number of repetitions. In some configurations, the preamble, either the start-indicator part or the clock-acquisition part, may be specifically defined for A-FSS transmission and used exclusively for that purpose. When such a dedicated preamble is employed, Layer 1 (L1) control information may be omitted, as the dedicated preamble itself provides sufficient signaling for the device to recognize and decode the A-FSS transmission.

In some exemplary configurations, the A-FSS may also be time-division multiplexed with data within an R2D transmission. Various approaches may be used to encode the control information transmitted in the PRDCH. In one exemplary approach, the control part may include resource allocation information for both the R2D or D2R data and the A-FSS transmission. The control information may include time-domain resources for both D2R and A-FSS, frequency-domain resources for both D2R and A-FSS, code rate for R2D, D2R, and A-FSS, device or group identifiers for R2D, D2R, and A-FSS, OOK chip duration for R2D, D2R, and A-FSS, and the number of repetitions for R2D, D2R, and A-FSS transmissions. This configuration may enable a reader to efficiently allocate resources and coordinate simultaneous data and frequency synchronization operations within the same transmission slot, improving spectrum efficiency while maintaining low-power operation suitable for AIOT deployments.

In some exemplary configurations, another approach may be used to define the control information associated with the A-FSS. Rather than including full resource allocation information in the control part, a simplified indicator may be provided to identify whether an A-FSS is transmitted. When the indicator specifies that A-FSS is present, the related information (e.g. time-domain and frequency-domain resources, modulation and coding scheme-like information, device or group identifiers, chip duration, and number of repetitions) may be included within a medium access control element (MAC-CE) contained in the R2D data portion of the transmission. The transmission bandwidth of a PRDCH carrying A-FSS may be the same as that of a PRDCH used for standard R2D transmission. The PRDCH including A-FSS may be time-division multiplexed with, or frequency-division multiplexed with, other PRDCHs carrying R2D data. In some cases, the PRDCH carrying A-FSS may be scheduled by another PRDCH carrying R2D data, allowing coordinated transmission and efficient use of resources within the AIOT environment 100.

The On-Off pattern for OOK symbols used in the A-FSS may be based on one or more binary sequences. To differentiate neighboring readers, one of several alternatives may be used. In a first alternative, for example, a single binary sequence may be shared by multiple readers that operate using time-division multiplexing. In a second alternative, for example, multiple different binary sequences may be assigned to different readers. Because of potential timing offsets caused by sampling frequency offset, an AIOT device may mistakenly synchronize with an A-FSS transmitted by a neighboring reader if the same sequence is used by both. Therefore, multiple sequences may be used to distinguish A-FSS transmissions from different readers. The A-FSS sequence used by a reader may be configured in one of two ways. In a first option, the sequence may be explicitly configured by the reader, with the necessary configuration information transmitted through an AIOT paging message or another R2D broadcast. In a second option, the sequence may be determined by a predefined rule, such as a cyclic shift used to identify the reader.

When the sequence is explicitly configured, the configuration information may include the modulation format, which may be On-Off Keying, Binary Phase Shift Keying, or Binary Frequency Shift Keying, the number of binary A-FSS sequences for the ON-OFF pattern, the periodicity of A-FSS transmission, and the transmission type, which may be aperiodic, periodic, or semi-persistent. For the binary A-FSS sequence pattern, existing pseudorandom sequences such as M-sequences, Gold sequences, or computer-generated sequences with good autocorrelation and cross-correlation properties may be used. The same type of binary sequence may also be used for the preamble in an R2D transmission. The number of binary A-FSS sequences may, for example, be three, four, eight, or sixteen. Sequence lengths may include 128-length M-sequences with M equal to eight, 256-length M-sequences with M equal to sixteen, or durations of four, eight, or sixteen OFDM symbols.

In some exemplary configurations, A-FSS transmission may employ frequency hopping to enhance synchronization performance. Frequency hopping may be performed across symbols using line encoding, such as Manchester encoding, FM0 encoding, or Miller encoding. This approach may allow the A-FSS to provide both time and frequency synchronization to an AIOT receiver using envelope detection. When A-FSS occupies an odd number of symbols, the carrier frequency location in the spectrum may vary across symbols. For example, the carrier frequency for successive symbols may alternate, enabling frequency diversity and improved robustness to interference.

The transmission of A-FSS may be aperiodic, periodic, or semi-persistent. For aperiodic transmission, an AIOT device that supports A-FSS reception may send a request signal for A-FSS transmission through a PRDCH. Upon receiving the request, the reader may include configuration information, such as transmission duration, in a paging message. In some cases, the reader may also initiate an aperiodic A-FSS transmission without receiving a device request, including configuration information directly in a paging message. For periodic transmission, the A-FSS periodicity may be configured based on synchronization requirements and may range, for example, from approximately 160 milliseconds to approximately 10.24 seconds. The periodicity configuration may be included in a paging message or another R2D broadcast used to trigger the initial synchronization procedure. For semi-persistent transmission, the configuration of A-FSS may also be included in a paging message, and an R2D transmission carrying either a paging message or data may trigger subsequent A-FSS transmissions. After receiving a triggering signal in an R2D transmission, a device may expect to receive the first A-FSS within a defined time window, such as between a minimum and maximum offset relative to the trigger transmission.

The A-FSS transmission may also support group-based communication, or groupcast, where a paging message includes an identifier associated with a group of devices selected to receive the A-FSS. Different preambles may be used for different group identifiers to differentiate group transmissions. This group-based configuration may allow a reader to efficiently synchronize multiple devices that share similar timing or frequency requirements while minimizing signaling overhead.

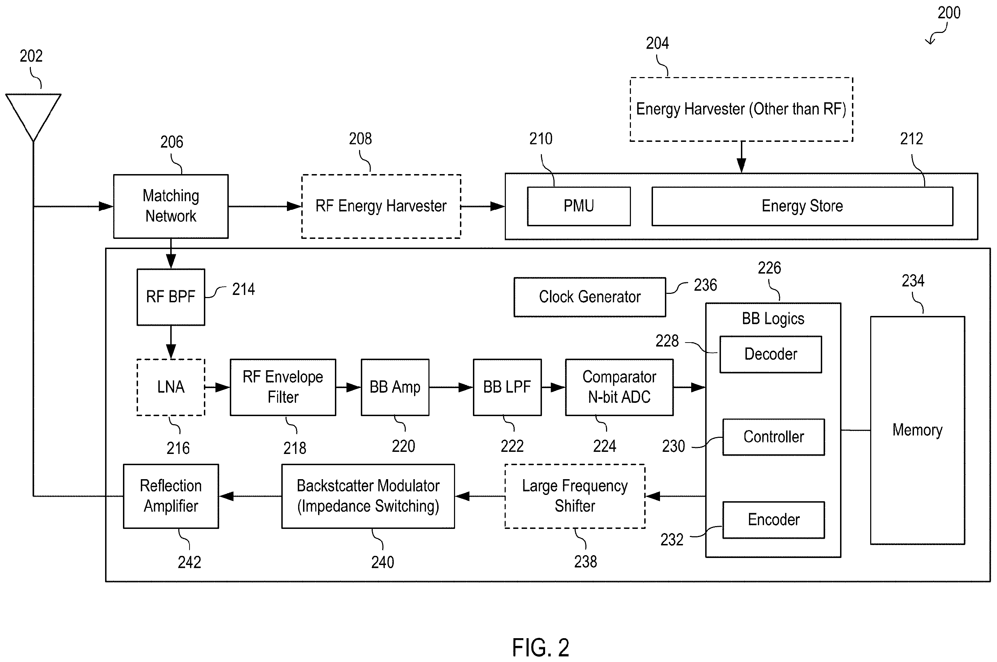

As mentioned above, devices in an AIOT environment may be implemented in accordance with a variety of different device types. For further explanation, therefore, FIG. 2 sets forth an example AIOT device implemented as a Device 2A and configured for synchronization in accordance with embodiments of the present disclosure. The device 200 includes components configured to receive energy and data from a reader and to transmit information to the reader using either active or backscatter communication, depending on available energy and operating conditions. The device 200 may be representative of a low-power device that relies on harvested energy but also includes an internally generated carrier for certain transmission operations. As illustrated, the device 200 includes an antenna 202, an energy harvester 204, and a communication and processing subsystem configured to perform signal reception, demodulation, modulation, and data handling. The configuration of these components may vary across AIOT device implementations depending on energy requirements, transmission distance, and application constraints.

As illustrated in FIG. 2, the device 200 includes an antenna 202, which may be shared or implemented separately for an RF energy harvester and for receiver or transmitter functions. The antenna 202 receives incident radio frequency (RF) signals from a reader and may also radiate backscattered or actively generated signals toward the reader. The antenna 202 is coupled to a matching network 206. The matching network 206 matches impedance between the antenna 202 and other components, including the RF energy harvester 208, when present, and various receiver-related circuit blocks, to ensure efficient power transfer and signal integrity.

A device configured like the device 200 of FIG. 2 may operate intermittently based on the amount of energy available from the energy harvesters 204 and 208 and therefore may not maintain a continuous internal frequency or timing reference. Because of this characteristic, a device of this type may rely on synchronization signals from a reader to achieve accurate communication alignment. The device 200 may use the start-indicator part of a preamble transmitted by a reader to detect the beginning of a reader-to-device transmission and to activate its reception circuitry at the appropriate time. The device 200 may also use the clock-acquisition part of the preamble to determine timing parameters, such as the duration of On-Off Keying chips, and to align a device clock with the reader's transmission timing. In addition, the device 200 may use frequency synchronization signaling, such as an AIOT frequency synchronization signal, to align an internally generated carrier frequency with the carrier frequency of the reader. These synchronization operations enable a device configured as shown in FIG. 2 to compensate for timing drift, oscillator inaccuracy, and energy-based interruptions, ensuring reliable reception and transmission within the AIOT environment.

The device 200 may include one or both energy harvesters, such as an energy harvester 204 that extracts energy from non-RF sources (for example, solar or vibrational energy) and an RF energy harvester 208 that collects energy from incident RF signals received through the antenna 202. Energy harvested by one or both energy harvesters 204 and 208 is directed to a power management unit (PMU) 210 and stored in an energy store 212. The energy store 212, which may include a capacitor or other charge storage element, stores harvested energy for later use. The PMU 210 manages both the transfer of energy from the energy harvesters 204 and 208 to the energy store 212 and the distribution of power from the energy store 212 to other active components of the device 200. The PMU 210 therefore supplies operating power to functional blocks when energy is available and may disable or reduce power delivery when energy reserves are low.

On the receiver side, a radio frequency bandpass filter (RF BPF) 214 improves selectivity by allowing signals within a target frequency band to pass while attenuating out-of-band interference. Depending on implementation, the RF BPF 214 may be omitted to reduce power consumption or circuit complexity. In some embodiments, a low noise amplifier (LNA) 216 may be used to amplify received RF signals and improve the sensitivity of the receiver. At least one of the R2D, carrier-wave-to-device (CW2D), and D2R signals may be amplified by either the reflection amplifier 242 or the LNA 216, depending on the device configuration and available power.

An envelope filter 218 detects the envelope of the received RF signal to recover modulated data or synchronization information. The baseband amplifier (BB amplifier) 220 amplifies the detected baseband signal to improve its strength for subsequent processing. A baseband low-pass filter (BB LPF) 222 filters out high-frequency components and harmonics, improving the signal quality before further demodulation or digitization. Depending on implementation, the BB LPF 222 may be omitted for simplicity or power efficiency. The comparator or N-bit analog-to-digital converter (ADC) 224 converts the analog baseband signal into a digital representation suitable for further digital processing within the device 200.

The digital baseband (BB) logics 226 include a decoder 228, a controller 230, and an encoder 232. The decoder 228 interprets digital information received from the comparator or ADC 224, recovering data, control information, or synchronization patterns. The controller 230 manages overall device operation, including coordination of receiving, processing, and transmitting functions, and may also control the switching of power among circuit blocks depending on energy availability. The encoder 232 generates digital transmit data for backscatter or active transmission, applying modulation patterns or encoding protocols as needed for communication with the reader. The BB logics 226 are coupled to a memory 234, which stores data and operational parameters. The memory 234 may include non-volatile memory (NVM), such as EEPROM, used to permanently store identifiers or configuration data, and volatile storage (such as registers) used to temporarily retain operational information while power remains in the energy store 212. A clock generator 236 provides the clock signals necessary for timing and synchronization of the digital and analog subsystems.

On the transmission side, a backscatter modulator 240 modulates the impedance presented to the antenna 202 to generate a backscattered signal that carries transmit data provided from the BB logics 226. In some configurations, a large frequency shifter 238 shifts the frequency of the backscattered signal by tens of megahertz, for example, from a downlink (FDD-DL) frequency to an uplink (FDD-UL) frequency. A reflection amplifier 242 may amplify the backscattered or reflected signal to extend transmission range or improve signal-to-noise ratio. The applicability of amplification in the reflection path may depend on the balance between achievable performance and power consumption constraints. In some configurations, at least one of the R2D, CW2D, or D2R signals may be amplified by either the reflection amplifier 242 or the LNA 216, depending on which circuit path is active. Collectively, these components enable the device 200 to harvest energy, manage power, process received signals, and perform low-power transmission operations suitable for deployment in an AIOT environment.

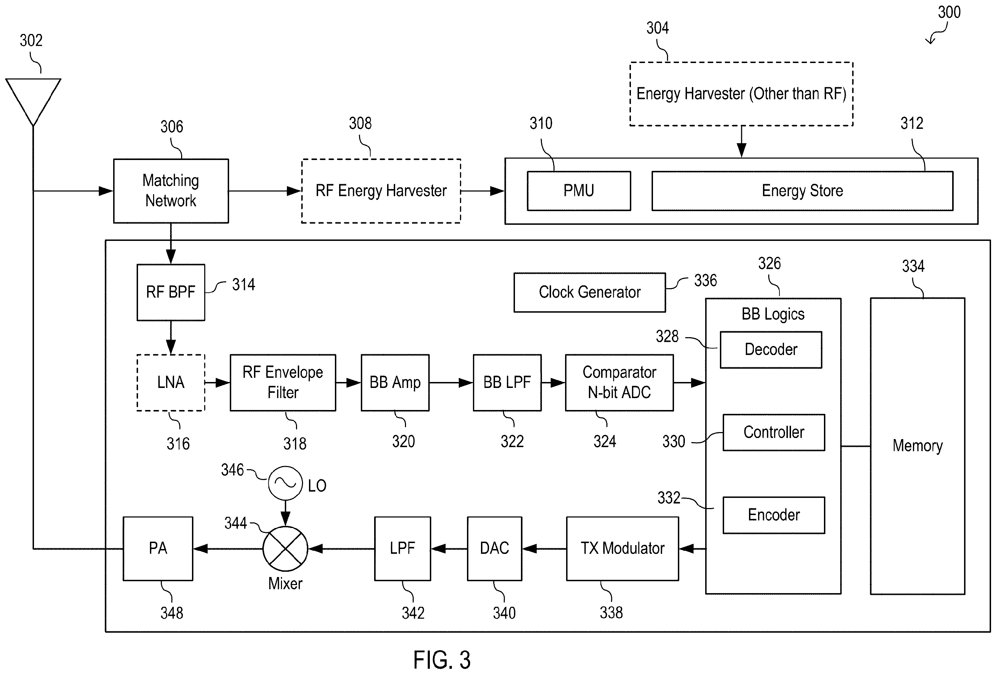

For further explanation, FIG. 3 sets forth an example AIOT device implemented as a Device 2B and configured for synchronization in accordance with embodiments of the present disclosure. The device 300 includes components configured to receive energy and data from a reader and to transmit information to the reader using an active transmitter chain in addition to backscatter-capable reception through an RF envelope detector receiver. The device 300 may be representative of a low-power device that relies on harvested energy and that also generates a carrier frequency for transmission using a local oscillator. As illustrated, the device 300 includes an antenna 302, an energy harvesting subsystem, and a communication and processing subsystem configured to perform signal reception, demodulation, modulation, frequency generation, and data handling. The configuration of these components may vary across AIOT device implementations depending on energy requirements, transmission distance, and application constraints.

As illustrated in FIG. 3, the device 300 includes an antenna 302, which may be shared or implemented separately for an RF energy harvester and for receiver or transmitter functions. The antenna 302 is coupled to a matching network 306. The matching network 306 matches impedance between the antenna 302 and other components, including the RF energy harvester 308, when present, and receiver-related circuit blocks, to promote efficient power transfer and signal integrity. One or both energy harvesters may be present. An energy harvester 304 may extract energy from non-RF sources such as light, vibration, or thermal gradients, and an RF energy harvester 308 may collect energy from incident RF signals received through the antenna 302. Harvested energy is directed to a PMU 310 and stored in an energy store 312. The PMU 310 manages transfer of energy from the energy harvesters 304 and 308 to the energy store 312 and distribution of power from the energy store 312 to active components of the device 300.

On the receiver side, an RF BPF 314 improves selectivity by passing signals in a desired band while attenuating out-of-band interference; depending on implementation the RF BPF 314 may be omitted to meet power targets. A low noise amplifier (LNA) 316, when present, improves received signal strength and sensitivity. An RF envelope filter 318 detects the envelope of the RF signal to recover baseband information for the RF envelope detector receiver. A BB amplifier 320 amplifies the detected baseband signal, and a BB LPF 322 removes high-frequency components and harmonics to improve the input presented to a comparator or N-bit ADC 324. The comparator or N-bit ADC 324 converts the analog baseband signal to a digital representation for further processing. Digital BB logics 326 include a decoder 328, a controller 330, and an encoder 332. The decoder 328 interprets received digital information, the controller 330 coordinates reception, processing, power management, and transmission operations, and the encoder 332 prepares outbound data for modulation.

A memory 334 stores device data and operational parameters and may include non-volatile memory for persistent information and registers for temporary information available while energy remains in the energy store 312. A clock generator 336 provides required clock signals for digital and analog subsystems. On the transmitter side, a transmit modulator 338 modulates baseband bits according to a selected modulation scheme, a DAC 340 converts digital transmit samples to analog form, and a low-pass filter 342 suppresses undesired spectral components. A mixer 344 upconverts the filtered baseband signal to RF using a local oscillator (LO) 346 that generates the carrier frequency; a frequency-locked loop or phase-locked loop may be used within the LO 346 for frequency synthesis depending on implementation. The LO may be implemented in a variety of different manners including as a Phase Lock Loop (PLL), Frequency Lock Loop (FLL) and other as will occur to those of skill in the art. A power amplifier (PA) 348, when present, amplifies the transmit signal before radiation by the antenna 302.

A device configured like the device 300 of FIG. 3 may operate intermittently based on energy available from the energy harvesters 304 and 308 and may generate a carrier using the LO 346, which may drift in frequency when power cycles occur or temperature varies. Because of these characteristics, the device 300 may rely on synchronization signaling from a reader to achieve accurate communication alignment. The device 300 may use a start-indicator part of a preamble to detect the beginning of a reader-to-device transmission and to activate reception circuitry at an appropriate time. The device 300 may also use a clock-acquisition part of the preamble to derive timing parameters, such as an On-Off Keying chip duration, and to align a device clock with reader transmission timing. In addition, the device 300 may use frequency synchronization signaling, such as an AIOT frequency synchronization signal, to align the LO 346 carrier frequency with the reader carrier frequency. These synchronization operations enable a device configured as shown in FIG. 3 to mitigate timing drift, frequency offset, and energy-driven interruptions, thereby supporting reliable reception and active transmission within an AIOT environment.

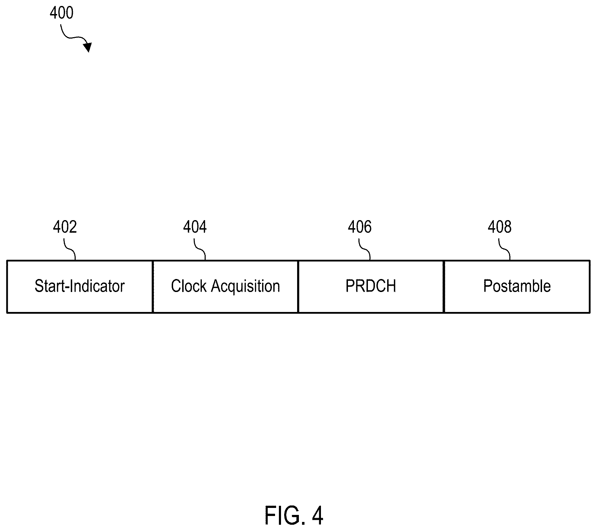

For further explanation, FIG. 4 sets forth an example of a timing acquisition signal used in AIOT environments for synchronization according to various embodiments of the present disclosure. As illustrated in FIG. 4, an example timing acquisition signal 400 used for synchronization in an AIOT environment includes a sequence of components that enable precise timing and frequency alignment between a reader and one or more devices. The timing acquisition signal 400 includes a start-indicator part 402, a clock-acquisition part 404, a PRDCH part 406, and a postamble part 408. Each component performs a specific role in establishing and maintaining synchronization within the AIOT system.

The start-indicator part 402 may include a defined signal pattern used by a device to detect the beginning of a reader-to-device transmission. The start-indicator part 402 enables the device to recognize the start of a timing acquisition signal and to activate its receiver circuitry at the appropriate time, reducing energy consumption. The pattern within the start-indicator part 402 may differ from data transmission patterns, allowing the device to distinguish synchronization signaling from ordinary communication signals.

The clock-acquisition part 404 may include a signal used to represent a timing parameter, such as the duration of On-Off Keying chips or other symbol-level timing information, which can be used by a device to align an internal clock to the reader's transmission timing. In some embodiments, the clock-acquisition part 404 may also encode information regarding the number of OOK chips per OFDM symbol through a sequence of rising and falling edges. By decoding this information, a device can configure local timing to match the parameters of the subsequent PRDCH transmission.

The PRDCH part 406 may represent the data portion of the signal, where control or data information is transmitted from the reader to one or more AIOT devices. The PRDCH part 406 may carry downlink information, including control commands, identifiers, configuration data, or other information necessary for device operation.

The postamble part 408 may be transmitted after the PRDCH part 406 and can include one or more symbols that mark the end of the reader-to-device transmission. The postamble part 408 may help devices confirm completion of the received message and may serve as a guard or separation interval before the next transmission. In some implementations, the postamble part 408 may include error detection or verification signaling that enables the device to validate the integrity of the received timing acquisition signal. Together, the start-indicator part 402, clock-acquisition part 404, PRDCH part 406, and postamble part 408 enable reliable synchronization, timing recovery, and data exchange between a reader and AIOT devices operating under low-power or energy-harvesting conditions.

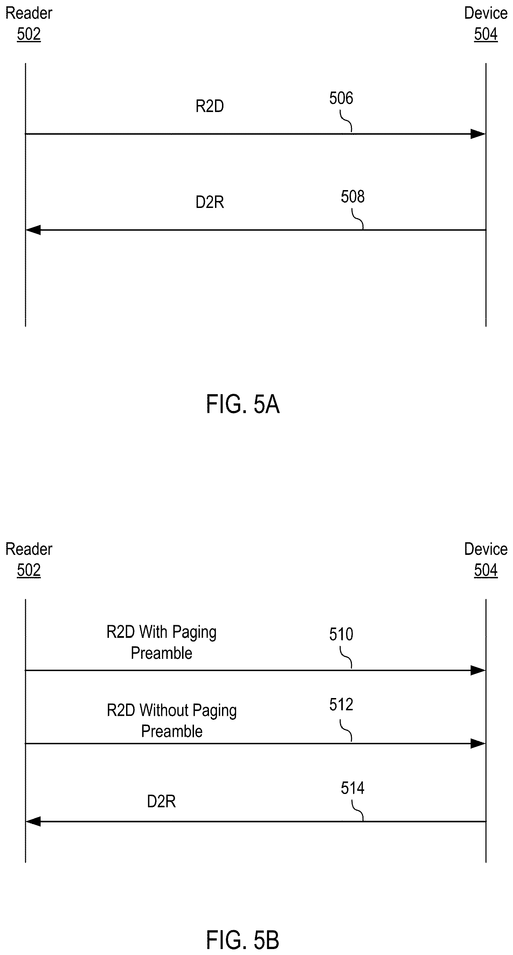

For further explanation, FIG. 5A depicts a timing diagram representing an example communication exchange between a reader 502 and a device 504 according to embodiments of the present disclosure. In the example shown, an R2D transmission 506 represents a timing acquisition signal that is transmitted from the reader 502 toward the device 504. The timing acquisition signal may include a preamble having a start-indicator part and a clock-acquisition part, which allow the device 504 to detect the start of the R2D transmission and to perform timing alignment. In the example of FIG. 5A, a paging message is not required because the start-indicator pattern used by the reader 502 is predefined and already known to the device 504. After receiving the R2D transmission 506, the device 504 may detect the pattern in the start-indicator part to determine the beginning of the transmission and use the clock-acquisition part to obtain a timing parameter, such as an On-Off Keying chip duration. Once the device 504 completes timing synchronization, the device 504 transmits a D2R signal 508 in response to the reader 502. The D2R signal 508 may carry an acknowledgment or data transmission, depending on the operational context, thereby completing the exchange between the reader 502 and the device 504.

For further explanation, FIG. 5B depicts a timing diagram representing an example communication exchange between a reader 502 and a device 504 where the reader 502 transmits a paging message prior to a timing acquisition signal according to embodiments of the present disclosure. In this example, the reader 502 first transmits an R2D transmission 510 that includes a paging message. The paging message may identify the sequence or pattern that will be used in the start-indicator part of a subsequent timing acquisition signal. After transmitting the paging message, the reader 502 sends a second R2D transmission 512 that includes the timing acquisition signal with the start-indicator part and the clock-acquisition part formed according to the sequence indicated in the paging message. The device 504 receives the paging message and prepares to detect the start-indicator pattern specified by the reader 502. When the device 504 subsequently receives the R2D transmission 512, the device 504 uses the start-indicator part to detect the beginning of the transmission and uses the clock-acquisition part to derive the timing parameter required for synchronization. After achieving timing alignment, the device 504 transmits a D2R signal 514 toward the reader 502, which may include acknowledgment or data information. This procedure allows dynamic configuration of the start-indicator sequence and supports flexible operation of the AIOT system in scenarios where the reader 502 selects synchronization parameters on demand.

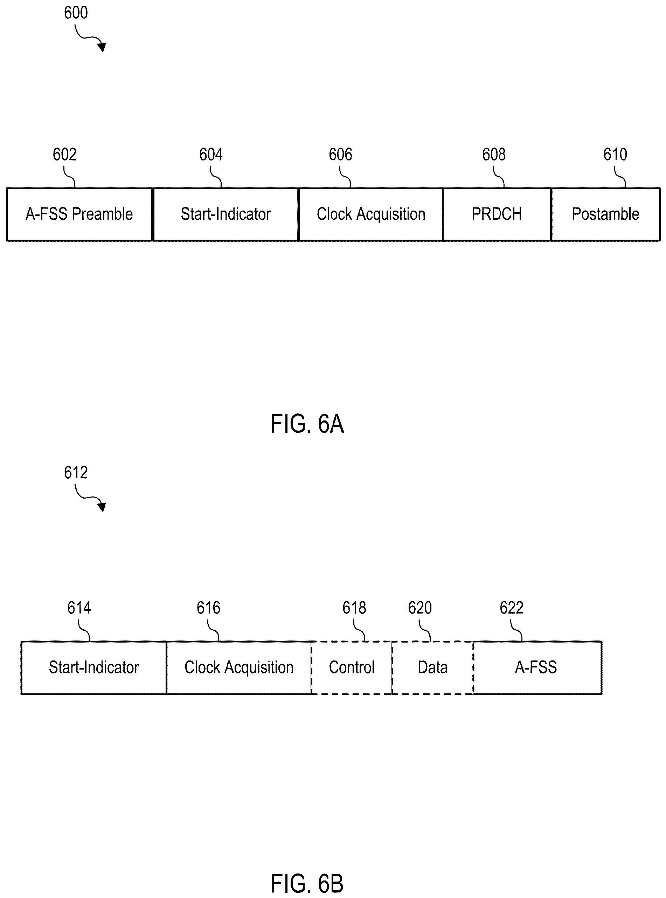

For further explanation, FIG. 6A sets forth an example signal useful for frequency synchronization in an AIOT environment according to embodiments of the present disclosure. The signal 600 includes a series of segments that enable both timing and frequency alignment between a reader and one or more AIOT devices. As illustrated, the signal 600 includes an A-FSS preamble 602, a start-indicator part 604, a clock-acquisition part 606, a PRDCH portion 608, and a postamble 610. Each segment may perform a specific function that contributes to synchronization and data exchange.

The A-FSS preamble 602 may represent a frequency synchronization signal used to align the carrier frequency of a device with that of a reader. The A-FSS preamble 602 may include one or more sequences that provide frequency reference information to assist devices that generate an internal carrier. The start-indicator part 604 may include a predefined pattern that allows a device to detect the beginning of a reader-to-device transmission. Upon detecting the start-indicator part 604, the device may activate reception circuitry to prepare for receiving subsequent portions of the signal. The clock-acquisition part 606 may represent a timing reference signal used to convey parameters such as the duration of On-Off Keying chips or symbol intervals. The clock-acquisition part 606 enables a device to synchronize local clock with the reader's transmission timing. The PRDCH portion 608 may include downlink data or control information transmitted from the reader to one or more devices. The postamble 610 may mark the end of the transmission, provide a transition between signals, or include error-checking or guard symbols to ensure clear separation from subsequent transmissions.

For further explanation, FIG. 6B sets forth an example signal useful for frequency synchronization in an AIOT environment according to embodiments of the present disclosure. The signal 612 represents a specific implementation of an A-FSS signal that may also include control or data information. As illustrated, the signal 612 includes a start-indicator part 614, a clock-acquisition part 616, a control section 618, a data section 620, and an A-FSS portion 622.

The start-indicator part 614 may include a pattern that identifies the start of an A-FSS transmission and enables a device to detect the beginning of the signal. The clock-acquisition part 616 may include timing reference information that allows a device to align timing parameters, such as chip duration, with the reader. The control section 618 may include control information such as device identifiers, configuration parameters, or resource allocation data. The data section 620 may include payload data transmitted from the reader to one or more devices. In some embodiments, the control section 618 and the data section 620 may be time-division multiplexed within the A-FSS signal. The A-FSS portion 622 may serve as a frequency synchronization segment used to align the frequency of an internal oscillator within a device to that of the reader. This configuration enables an A-FSS signal to support both frequency synchronization and communication, thereby improving synchronization accuracy and communication efficiency within the AIOT environment.

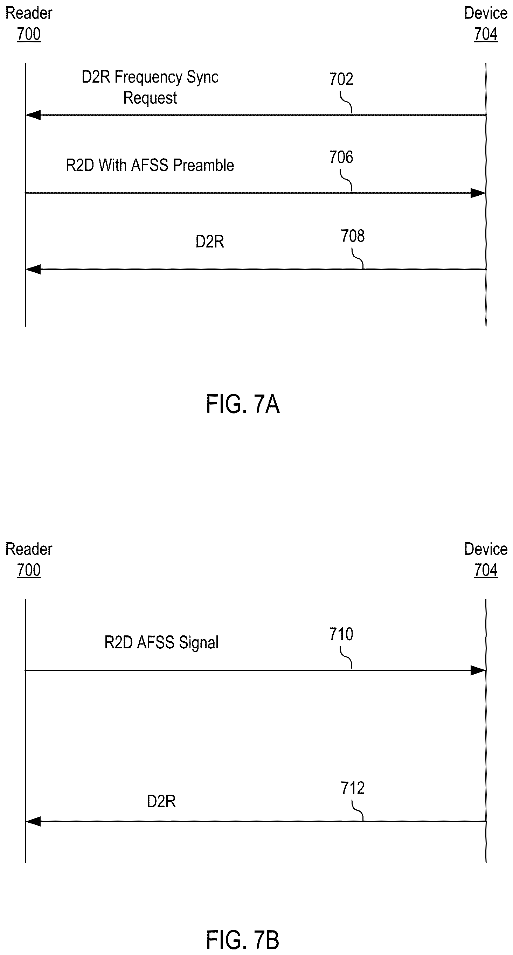

For further explanation, FIG. 7A depicts a timing diagram representing an example message exchange between a reader 700 and a device 704 in an AIOT environment according to embodiments of the present disclosure. In this example, the message exchange is used to perform frequency synchronization between the reader 700 and the device 704. The device 704 first transmits a D2R frequency synchronization request 702 toward the reader 700. The frequency synchronization request 702 may indicate that the device 704 requires a reference signal to align an internally generated carrier frequency with that of the reader 700. In response to the request, the reader 700 transmits an R2D signal 706 that includes an A-FSS preamble. The A-FSS preamble provides frequency reference information that enables the device 704 to adjust the internal oscillator or carrier frequency. After receiving the R2D signal 706, the device 704 may process the A-FSS preamble, perform frequency alignment, and confirm synchronization with the reader 700. The device 704 then transmits a D2R signal 708 back to the reader 700, which may contain an acknowledgment or data transmission depending on the operational context. This exchange illustrates a frequency synchronization procedure in which the reader 700 responds to a synchronization request by embedding frequency reference information in a transmission containing an A-FSS preamble.

For further explanation, FIG. 7B depicts a timing diagram representing another example message exchange between a reader 700 and a device 704 in an AIOT environment according to embodiments of the present disclosure. In this example, the reader 700 transmits a dedicated A-FSS signal 710 toward the device 704. Unlike the exchange illustrated in FIG. 7A, the signal 710 is a specific A-FSS transmission rather than a typical R2D transmission containing only an additional preamble for frequency synchronization. The A-FSS signal 710 may contain frequency reference sequences, such as Gold or M-sequences, that enable one or more devices to achieve precise carrier frequency alignment with the reader 700. The device 704 receives the A-FSS signal 710, extracts the frequency reference information, and adjusts the device's internal oscillator or carrier frequency accordingly. After frequency alignment is achieved, the device 704 transmits a D2R signal 712 toward the reader 700. The D2R signal 712 may contain an acknowledgment of synchronization or additional communication data. This example demonstrates an implementation in which a dedicated A-FSS signal is used to provide frequency synchronization across one or more devices in an AIOT environment.

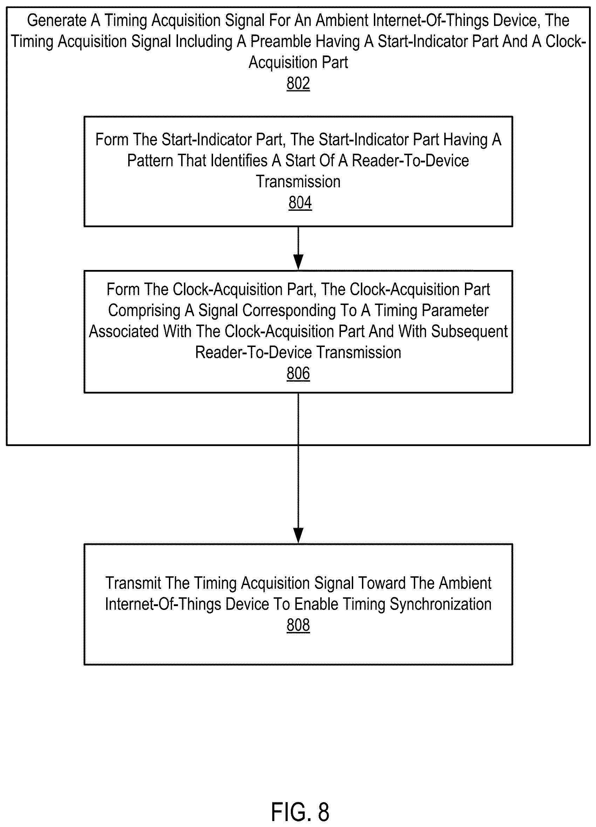

For further explanation, FIG. 8 sets forth a flow chart illustrating an example method of synchronization in an AIOT environment in accordance with embodiments of the present disclosure. The example method of FIG. 8 can be carried out in a system similar to that of FIG. 1. The method of FIG. 8 can be performed by a reader 102 configured to communicate with one or more AIOT devices 104, 106, and 108.

The method of FIG. 8 includes generating 802 a timing acquisition signal for an AIOT device. Generating 802 the timing acquisition signal for an AIOT device may be carried out by the reader 102 using transmission circuitry configured to produce a signal structure suitable for synchronization of devices that operate with limited or intermittent energy. The timing acquisition signal may be generated to include a preamble having a start-indicator part and a clock-acquisition part. The preamble may be configured so that low-power AIOT devices can easily detect the beginning of a reader-to-device transmission and extract timing information from the signal. For example, the reader 102 may generate the preamble using On-Off Keying modulation or another modulation technique that allows detection through envelope-based receivers at the devices.

In the method of FIG. 8, generating 802 includes forming 804 the start-indicator part, the start-indicator part having a pattern that identifies a start of a reader-to-device transmission. Forming 804 the start-indicator part having a pattern that identifies a start of a reader-to-device transmission may be carried out by the reader 102 constructing a specific pattern of symbols that is distinct from data transmission patterns so that the AIOT device can unambiguously recognize the beginning of a synchronization signal. In some configurations, the start-indicator part may include an ON-OFF-ON-OFF sequence or another pattern of On-Off Keying symbols that differ from Manchester-encoded data patterns. The reader 102 may select the pattern according to a predefined configuration or based on device-specific settings communicated through a paging message. The pattern may allow the device to activate receiver circuitry and begin timing detection with minimal energy consumption.

In the method of FIG. 8, generating 802 also includes forming 806 the clock-acquisition part, the clock-acquisition part including a signal corresponding to a timing parameter associated with the clock-acquisition part and with subsequent reader-to-device transmission. Forming 806 the clock-acquisition part including a signal corresponding to a timing parameter associated with the clock-acquisition part and with subsequent reader-to-device transmission may be carried out by the reader 102 generating a signal segment that encodes a timing parameter, such as the number of On-Off Keying chips per Orthogonal Frequency Division Multiplexing symbol. The reader 102 may use rising or falling edges within the signal to represent discrete values of the timing parameter. For example, two edges may represent one chip per symbol, while eight edges may represent eight chips per symbol. The AIOT device receiving this segment may decode the number of edges to determine the corresponding timing configuration, allowing the device to synchronize a local clock to the reader's transmission rate.

The method of FIG. 8 also includes transmitting 808 the timing acquisition signal toward the AIOT device to enable timing synchronization. Transmitting 808 the timing acquisition signal toward the AIOT device to enable timing synchronization may be carried out by the reader 102 through a physical reader-to-device channel, where the preamble, including the start-indicator part and the clock-acquisition part, is transmitted before any control or data information. The AIOT device may receive the signal, detect the start-indicator pattern to determine the start of the transmission, and then use the clock-acquisition part to establish timing alignment. For example, an AIOT device with a configuration similar to device 200 or device 300 may activate energy storage and processing components only after detecting the start-indicator pattern, conserving energy while maintaining precise timing synchronization with the reader 102. This process enables the AIOT system to achieve reliable communication despite low power availability and intermittent operation at the device side.

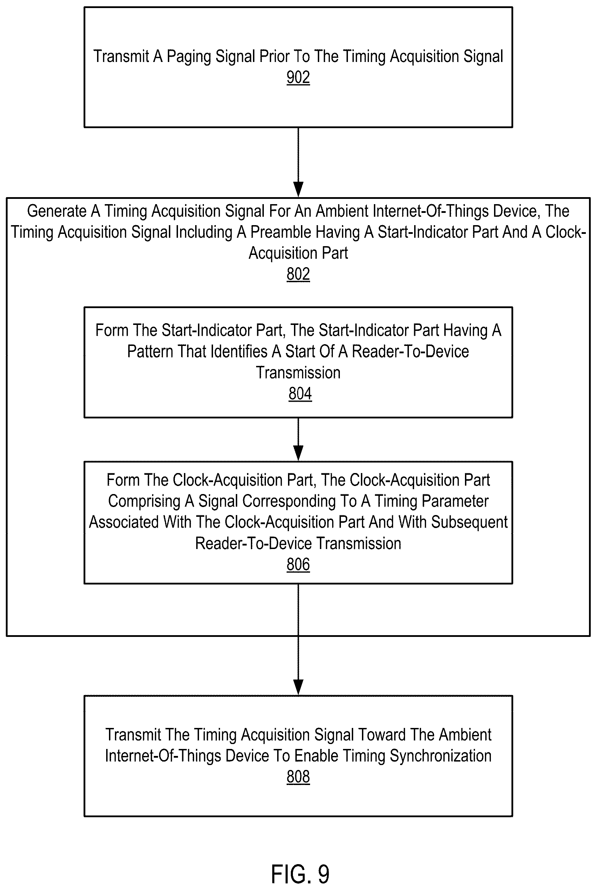

For further explanation, FIG. 9 sets forth a flow chart illustrating another example method of synchronization in an AIOT environment in accordance with embodiments of the present disclosure. The method of FIG. 9 is similar to the method of FIG. 8 and includes generating 802 a timing acquisition signal for an AIOT device, forming 804 a start-indicator part, forming 806 a clock-acquisition part, and transmitting 808 the timing acquisition signal toward the AIOT device to enable timing synchronization.

The method of FIG. 9 also includes transmitting 902 a paging signal prior to the timing acquisition signal. In the method of FIG. 9, the paging signal indicates the pattern that will be included in the timing acquisition signal. Transmitting 902 the paging signal prior to the timing acquisition signal may be carried out by a reader 102 using transmission circuitry configured to communicate with one or more AIOT devices. The paging signal may contain information identifying the sequence, waveform, or symbol pattern that will be used for the start-indicator part of a subsequent timing acquisition signal. The reader 102 may select the pattern dynamically based on network conditions, device category, or interference considerations. For example, when multiple AIOT devices are present within communication range, the reader 102 may transmit distinct paging signals to different devices, where each paging signal specifies a unique start-indicator pattern. This approach may help avoid collisions and ensure that each device correctly detects the start of its corresponding timing acquisition signal.

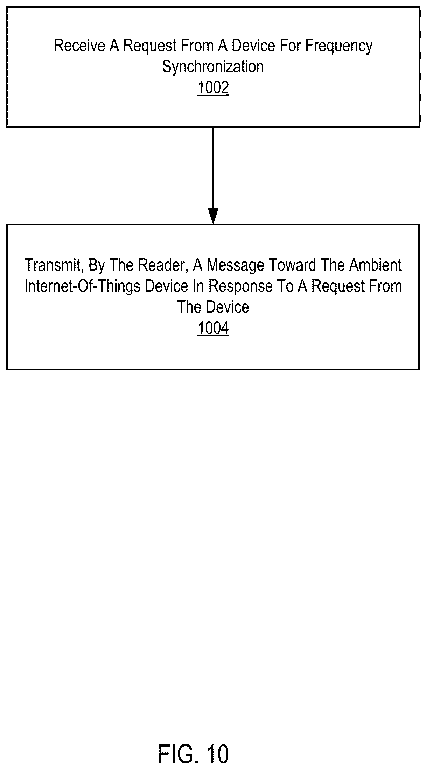

For further explanation, FIG. 10 sets forth a flow chart illustrating an example method of frequency synchronization in an AIOT environment in accordance with embodiments of the present disclosure. The example method of FIG. 10 can be carried out in a system similar to that of FIG. 1. The method of FIG. 10 can be performed by a reader 102 that communicates with one or more AIOT devices 104, 106, and 108.

The method of FIG. 10 includes receiving 1002, by a reader, a request from a device for frequency synchronization. Receiving 1002 a request from a device for frequency synchronization may be carried out by the reader 102 by monitoring a device-to-reader channel for a frequency-alignment request message that indicates oscillator drift, degraded demodulation, or a commissioning event. As a concrete example, a device 300 that uses a LO 346 may transmit a short request coded with a device identifier stored in memory 334 when a measured frequency offset exceeds a threshold determined by controller 330. As another example, a device 200 that operates intermittently may request frequency alignment after a power-up event managed by the PMU 210.

The method of FIG. 10 also includes transmitting 1004, by the reader, an AIOT frequency synchronization signal in a physical reader-to-device channel, the frequency synchronization signal providing frequency alignment for one or more AIOT devices and transmitted in a time-division-multiplexed manner. Transmitting 1004 the AIOT frequency synchronization signal may be carried out by the reader 102 by generating an A-FSS that is similar to the structure depicted in FIG. 6B and scheduling the A-FSS in time alongside reader-to-device data within the same physical reader-to-device channel. For example, the reader 102 may allocate an initial time interval to a start-indicator part and a clock-acquisition part followed by an A-FSS portion that carries frequency-reference sequences, with a subsequent time interval carrying downlink data addressed to device 104 or a group of devices indicated in control information. As another example, the reader 102 may broadcast the A-FSS to multiple devices while interleaving short data segments for acknowledgments or configuration updates, thereby providing frequency alignment and communication within a single transmission opportunity.

In another embodiment not depicted in FIG. 10, the method may include transmitting, by the reader, a message toward the AIOT device in response to a request from the device, where the message includes a preamble specific to frequency synchronization similar to that shown in FIG. 6B. This embodiment may be carried out by the reader 102 selecting a frequency-synchronization preamble from a configured set, inserting the selected preamble ahead of downlink content, and transmitting the message so that the device 200 or the device 300 derives a carrier-frequency reference from the frequency-synchronization preamble prior to receiving subsequent data.

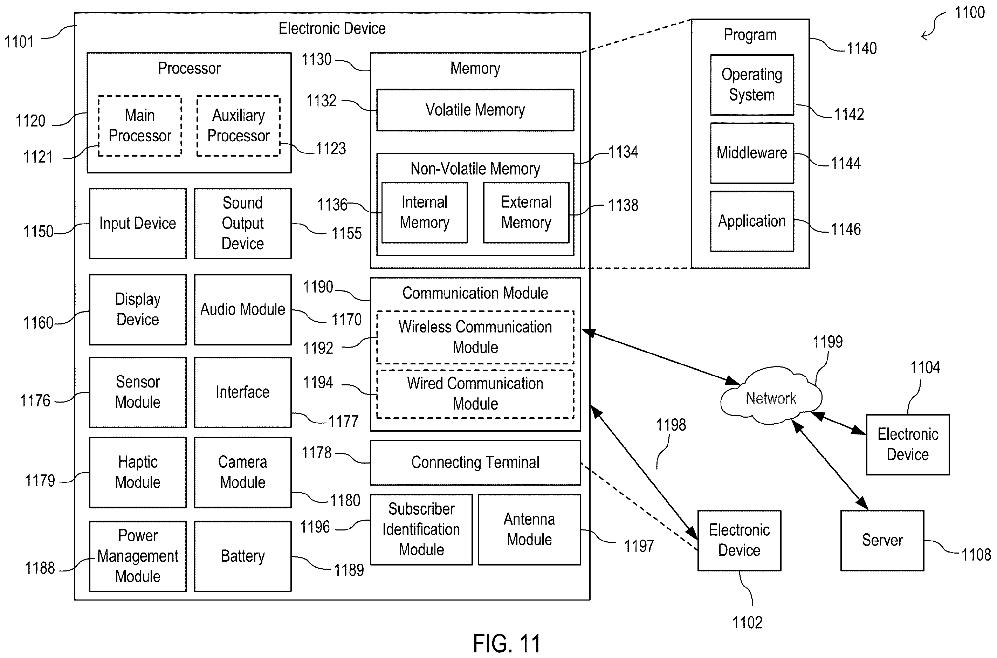

FIG. 11 is a block diagram of an electronic device in a network environment 1100, such as the example AIOT environments described above, according to an embodiment. The network environment 1100 may include or operate in conjunction with an AIOT reader, such as the reader 102 of FIG. 1, or one or more AIOT devices, such as devices 104, 106, and 108 of FIG. 1. The electronic device 1101 may function as or form part of an AIOT reader configured to transmit timing acquisition signals, frequency synchronization signals, and data to AIOT devices, or as an AIOT device configured to receive such signals and perform synchronization and data exchange operations within the AIOT environment.

Referring to FIG. 11, an electronic device 1101 in a network environment 1100 may communicate with an electronic device 1102 via a first network 1198 (e.g., a short-range wireless communication network), or an electronic device 1104 or a server 1108 via a second network 1199 (e.g., a long-range wireless communication network). the electronic device 1101 in the network environment 1100 may correspond to or include the functional components of the reader 102 or one of the AIOT devices 104, 106, or 108. For example, when configured as a reader, the electronic device 1101 may include a communication module 1190 and an antenna module 1197 adapted to transmit timing acquisition and frequency synchronization signals in accordance with the synchronization techniques described with respect to FIGS. 4 through 10. When configured as an AIOT device, the electronic device 1101 may include energy-harvesting circuitry, low-power processing elements, and synchronization logic that operate in conjunction with the components of the reader 102 within the same AIOT network. The electronic device 1101 in the network environment 1100 may correspond to or include the functional components of the reader 102 or one of the AIOT devices 104, 106, or 108. For example, when configured as a reader, the electronic device 1101 may include a communication module 1190 and an antenna module 1197 adapted to transmit timing acquisition and frequency synchronization signals in accordance with the synchronization techniques described with respect to FIGS. 4 through 10. When configured as an AIOT device, the electronic device 1101 may include energy-harvesting circuitry, low-power processing elements, and synchronization logic that operate in conjunction with the components of the reader 102 within the same AIOT network.

The electronic device 1101 may communicate with the electronic device 1104 via the server 1108. The electronic device 1101 may include a processor 1120, a memory 1130, an input device 1150, a sound output device 1155, a display device 1160, an audio module 1170, a sensor module 1176, an interface 1177, a haptic module 1179, a camera module 1180, a power management module 1188, a battery 1189, a communication module 1190, a subscriber identification module (SIM) card 1196, or an antenna module 1197. In one embodiment, at least one (e.g., the display device 1160 or the camera module 1180) of the components may be omitted from the electronic device 1101, or one or more other components may be added to the electronic device 1101. Some of the components may be implemented as a single integrated circuit (IC). For example, the sensor module 1176 (e.g., a fingerprint sensor, an iris sensor, or an illuminance sensor) may be embedded in the display device 1160 (e.g., a display).

The processor 1120 may execute software (e.g., a program 1140) to control at least one other component (e.g., a hardware or a software component) of the electronic device 1101 coupled with the processor 1120 and may perform various data processing or computations.

As at least part of the data processing or computations, the processor 1120 may load a command or data received from another component (e.g., the sensor module 1176 or the communication module 1190) in volatile memory 1132, process the command or the data stored in the volatile memory 1132, and store resulting data in non-volatile memory 1134. The processor 1120 may include a main processor 1121 (e.g., a central processing unit (CPU) or an application processor (AP)), and an auxiliary processor 1123 (e.g., a graphics processing unit (GPU), an image signal processor (ISP), a sensor hub processor, or a communication processor (CP)) that is operable independently from, or in conjunction with, the main processor 1121. Additionally or alternatively, the auxiliary processor 1123 may be adapted to consume less power than the main processor 1121, or execute a particular function. The auxiliary processor 1123 may be implemented as being separate from, or a part of, the main processor 1121.

The auxiliary processor 1123 may control at least some of the functions or states related to at least one component (e.g., the display device 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). The auxiliary processor 1123 (e.g., an image signal processor or a communication processor) may be implemented as part of another component (e.g., the camera module 1180 or the communication module 1190) functionally related to the auxiliary processor 1123.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134. Non-volatile memory 1134 may include internal memory 1136 and/or external memory 1138. When the electronic device 1101 functions as an AIOT reader, the program 1140 or application 1146 stored in the memory 1130 may include instructions executable by the processor 1120 to perform operations such as generating timing acquisition signals, forming start-indicator and clock-acquisition parts, or transmitting frequency synchronization signals. When the electronic device 1101 functions as an AIOT device, the program 1140 may include instructions for detecting start-indicator sequences, decoding clock-acquisition information, or adjusting timing and frequency parameters in response to synchronization signals received from the reader.

The program 1140 may be stored in the memory 1130 as software, and may include, for example, an operating system (OS) 1142, middleware 1144, or an application 1146.

The input device 1150 may receive a command or data to be used by another component (e.g., the processor 1120) of the electronic device 1101, from the outside (e.g., a user) of the electronic device 1101. The input device 1150 may include, for example, a microphone, a mouse, or a keyboard.

The sound output device 1155 may output sound signals to the outside of the electronic device 1101. The sound output device 1155 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1160 may visually provide information to the outside (e.g., a user) of the electronic device 1101. The display device 1160 may include, for example, a display, a hologram device, or a projector and control circuitry to control a corresponding one of the display, hologram device, and projector. The display device 1160 may include touch circuitry adapted to detect a touch, or sensor circuitry (e.g., a pressure sensor) adapted to measure the intensity of force incurred by the touch.

The audio module 1170 may convert a sound into an electrical signal and vice versa. The audio module 1170 may obtain the sound via the input device 1150 or output the sound via the sound output device 1155 or a headphone of an external electronic device 1102 directly (e.g., wired) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. The sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device 1102 directly (e.g., wired) or wirelessly. The interface 1177 may include, for example, a high- definition multimedia interface (HDMI), a universal serial bus (USB) interface, a secure digital (SD) card interface, or an audio interface.

A connecting terminal 1178 may include a connector via which the electronic device 1101 may be physically connected with the external electronic device 1102. The connecting terminal 1178 may include, for example, an HDMI connector, a USB connector, an SD card connector, or an audio connector (e.g., a headphone connector).

The haptic module 1179 may convert an electrical signal into a mechanical stimulus (e.g., a vibration or a movement) or an electrical stimulus which may be recognized by a user via tactile sensation or kinesthetic sensation. The haptic module 1179 may include, for example, a motor, a piezoelectric element, or an electrical stimulator.

The camera module 1180 may capture a still image or moving images. The camera module 1180 may include one or more lenses, image sensors, image signal processors, or flashes. The power management module 1188 may manage power supplied to the electronic device 1101. The power management module 1188 may be implemented as at least part of, for example, a power management integrated circuit (PMIC).

The battery 1189 may supply power to at least one component of the electronic device 1101. The battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the AP) and supports a direct (e.g., wired) communication or a wireless communication. The communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as BLUETOOTH^{™}, wireless-fidelity (Wi-Fi) direct, or a standard of the Infrared Data Association (IrDA)) or the second network 1199 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1192 may identify and authenticate the electronic device 1101 in a communication network, such as the first network 1198 or the second network 1199, using subscriber information (e.g., international mobile subscriber identity (IMSI)) stored in the SIM card 1196. In an AIOT implementation, the communication module 1190 and antenna module 1197 may together perform the functions of the transceiver of the reader 102 or of an AIOT device such as the devices 104, 106, or 108. For example, when the electronic device 1101 is configured as a reader, the communication module 1190 may generate and transmit an A-FSS or a timing acquisition signal to one or more AIOT devices using a physical reader-to-device channel. When the electronic device 1101 is configured as an AIOT device, the communication module 1190 may receive such signals, extract synchronization information, and respond with a device-to-reader transmission.

The antenna module 1197 may transmit or receive a signal or power to or from the outside (e.g., the external electronic device) of the electronic device 1101. The antenna module 1197 may include one or more antennas, and, therefrom, at least one antenna appropriate for a communication scheme used in the communication network, such as the first network 1198 or the second network 1199, may be selected, for example, by the communication module 1190 (e.g., the wireless communication module 1192). The signal or the power may then be transmitted or received between the communication module 1190 and the external electronic device via the selected at least one antenna.

Commands or data may be transmitted or received between the electronic device 1101 and the external electronic device 1104 via the server 1108 coupled with the second network 1199. Each of the electronic devices 1102 and 1104 may be a device of a same type as, or a different type, from the electronic device 1101. All or some of operations to be executed at the electronic device 1101 may be executed at one or more of the external electronic devices 1102, 1104, or server 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1101. The electronic device 1101 may provide the outcome, with or without further processing of the outcome, as at least part of a reply to the request. To that end, a cloud computing, distributed computing, or client-server computing technology may be used, for example. In the context of the AIOT environment, the server 1108 may represent a cloud or edge-processing node configured to coordinate synchronization among multiple readers and AIOT devices, store configuration information for timing and frequency synchronization, or distribute updates to readers and devices operating under the synchronization methods described in FIGS. 4 through 10.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
generating (802), by a reader (102, 502, 700), a timing acquisition signal (400) for an Ambient Internet-of-Things, AIOT, device (104, 106, 108, 200, 300, 504, 704), the timing acquisition signal (400) including a preamble having a start-indicator part (402) and a clock-acquisition part (404), including:
forming (804) the start-indicator part (402), the start-indicator part (402) having a pattern that identifies a start of a reader-to-device transmission (506); and
forming (806) the clock-acquisition part (404), the clock-acquisition part (404) comprising a signal corresponding to a timing parameter associated with the clock-acquisition part (404) and with subsequent reader-to-device transmission; and
transmitting (808), by the reader (102, 502, 700), the timing acquisition signal (400) toward the AIOT device (104, 106, 108, 200, 300, 504, 704) to enable timing synchronization.

2. The method of claim 1, wherein the pattern comprises an ON-OFF-ON-OFF sequence.

3. The method of claim 1 or 2, wherein the pattern is configured by the reader (102, 502, 700).

4. The method of claim 3, further comprising transmitting (902), by the reader (102, 502, 700), a paging signal prior to the timing acquisition signal (400), the paging signal indicating the pattern for the start-indicator part (402) of the preamble.

5. The method of any one of claims 1 to 4, wherein the pattern is predefined for all timing acquisition signals (400) transmitted by the reader (102, 502, 700).

6. The method of any one of claims 1 to 5, wherein the signal corresponding to the timing parameter includes a number of rising and falling edges that encode the timing parameter.

7. The method of claim 6, wherein the timing parameter represents a number of On-Off Keying chips per Orthogonal Frequency Division Multiplexing symbol.

8. The method of any one of claims 1 to 7, further comprising transmitting (1004), by the reader (102, 502, 700), a message toward the AIOT device (104, 106, 108, 200, 300, 504, 704) in response to a request (702) from the AIOT device (104, 106, 108, 200, 300, 504, 704), the message (706) including a preamble specific to frequency synchronization.

9. The method of any one of claims 1 to 7, further comprising transmitting (1004), by the reader (102, 502, 700), an AIOT frequency synchronization signal (622) in a physical reader-to-device channel, the frequency synchronization signal (622) providing frequency alignment for one or more AIOT devices (104, 106, 108, 200, 300, 504, 704).

10. The method of claim 9, wherein the AIOT frequency synchronization signal (622) is transmitted time-division multiplexed with reader-to-device data (620) and control signals (618) in the physical reader-to-device channel.

11. An apparatus (1101) comprising at least one processing device (1120) and a memory (1030) coupled to the processing device (1120), the memory (1030) storing instructions that, when executed by the processing device (1120), cause the apparatus to:
generate (802) a timing acquisition signal (400) for an Ambient Internet-of-Things, AIOT, device (104, 106, 108, 200, 300, 504, 704), the timing acquisition signal (400) including a preamble having a start-indicator part and a clock-acquisition part (404), including:
forming (804) the start-indicator part (402), the start-indicator part (402) having a pattern that identifies a start of a reader-to-device transmission; and
forming (806) the clock-acquisition part (404), the clock-acquisition part (404) including a signal corresponding toa timing parameter associated with the clock-acquisition part (404) and with subsequent reader-to-device transmission; and
transmit (808) the timing acquisition signal (400) toward an AIOT device (104, 106, 108, 200, 300, 504, 704) to enable timing synchronization.

12. The apparatus of claim 11, wherein the pattern comprises an ON-OFF-ON-OFF sequence.

13. The apparatus of claim 11 or 12, wherein the pattern is configured by the apparatus (1101), and the apparatus (1101) transmits a paging signal prior to the timing acquisition signal (400), the paging signal indicating the pattern that will be included in the timing acquisition signal (400).

14. The apparatus of any one of claims 11 to 13, wherein the pattern is predefined for all timing acquisition signals (400) transmitted by the apparatus (1001).

15. The apparatus of any one of claims 11 to 14, wherein the apparatus transmits an AIOT frequency synchronization signal (622) which is transmitted time-division multiplexed with reader-to-device data (620) and control signals (618) in a physical reader-to-device channel, the frequency synchronization signal providing frequency alignment for one or more AIOT devices (104, 106, 108, 200, 300, 504, 704).
